# FASCICULE DE BREVET EUROPEEN

(11) **EP 2 855 135 B1**
(45) Date de publication et mention de la délivrance du brevet: **10.08.2016**
(21) Numéro de dépôt: 13725112.0
(22) Date de dépôt: 15.05.2013
(51) Int. Cl.: B29D 30/52

(54) **PROCEDE DE FABRICATION D'UNE PAROI FLEXIBLE DANS UN SILLON DE BANDE DE ROULEMENT POUR PNEUMATIQUE**
VERFAHREN ZUR HERSTELLUNG EINER FLEXIBLEN WAND IN EINER NUT EINES LAUFSTREIFENS FÜR EINEN REIFEN
METHOD FOR PRODUCING A FLEXIBLE WALL IN A GROOVE OF A TREAD FOR A TYRE

(30) Priorité: 31.05.2012 FR 1255038
(43) Date de publication de la demande: 08.04.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: PIALOT, Frédéric, F-63040 Clermont-Ferrand Cedex 9 (FR)
(74) Mandataire: Noel, Luminita
(86) Numéro de dépôt international: PCT/EP2013/060082
(87) Numéro de publication internationale: WO 2013/178473

(56) Documents cités:
- WO-A1-2010/063749
- FR-A1- 2 946 915
- GB-A- 2 450 723
- JP-A- 2007 210 569
- US-A- 5 800 642
- US-A1- 2004 016 491

## Description

L'invention concerne le domaine de la fabrication des pneumatiques, et en particulier celui de la fabrication des bandes de roulement pour pneumatiques.

Plus particulièrement, l'invention s'intéresse à la fabrication des parois flexibles disposées dans un sillon de sculpture de pneumatique.

Les sillons de la sculpture ont pour objet de drainer et d'évacuer l'eau, lorsque le pneumatique circule sur un sol mouillé ou détrempé. Ces sillons sont à l'origine d'une partie des phénomènes de bruit de roulage, en ce qu'ils constituent des zones d'accumulation d'air sous pression générant des ondes sonores. Les sillons sont disposés dans le sens circonférentiel et dans le sens axial, et leur disposition, leur dimension ainsi que leur nombre font l'objet d'études détaillées de la part des concepteurs de sculptures de pneumatiques.

Dans le but de réduire le niveau de bruit de roulage des pneumatiques, tout en préservant les qualités de drainage de l'eau, il est connu de l'état de la technique de disposer des parois flexibles de faible épaisseur dans une direction transversale à la direction des sillons. Ces parois, connues également sous le nom de volets ou membranes flexibles s'étendent transversalement depuis l'une des parois du sillon et ont la particularité de garder leur forme initiale en fermant le sillon lorsque le pneumatique roule sur sol sec afin de bloquer la diffusion des ondes sonores, et de pouvoir fléchir et d'ouvrir ainsi le sillon lorsque le pneumatique roule sur sol mouillé pour permettre l'évacuation de l'eau pénétrant dans le sillon de drainage.

Les publications FR 2 715 891, GB 2 450 723 ou encore EP 908 330 décrivent des formes d'exécution différentes de ces parois flexibles.

Il a été constaté que les formes d'exécution les plus courantes concernent des parois ou volets flexibles s'étendant depuis la paroi de fond du sillon, en raison de l'absence de contre dépouilles s'opposant au démoulage du pneumatique, à l'issue de l'étape de vulcanisation. La paroi du volet présente une ou plusieurs fentes radiales, autorisant ledit volet à pivoter autour de son point d'attache à la paroi du sillon lorsque le volet passe d'une position ouverte à une position fermée. L'épaisseur de tels volets ou parois flexibles varie entre 0,2 mm et 2 mm pour un pneu équipant un véhicule de tourisme.

En pratique, les moules destinés au moulage des pneumatiques comprenant de tels volets flexibles comportent des cavités fermées ayant la forme et les dimensions des volets qui sont pratiquées au sein des cordons destinés à mouler les sillons de drainage.

Toutefois, la réalisation de ces cavités, avec le degré de précision requis, s'accompagne d'un grand nombre de difficultés, en particulier lorsqu'on utilise des techniques de réalisation des moules par coulage de matière fondue sur une matrice perdue, généralement en plâtre, et dans laquelle la finesse des éléments rend ces derniers excessivement fragiles.

Une solution a été proposée dans le document FR-2946915-A1, qui consiste à réaliser des inserts comprenant des réservations de découpe placées perpendiculairement à la direction du sillon et qui sont disposées au sein des cordons des éléments de garniture. Fonctionnant de manière satisfaisante, on s'est toutefois aperçu qu'il était difficile d'obtenir par moulage des volets flexibles de faible épaisseur séparés de la paroi latérale du sillon par des fentes encore plus fines que l'épaisseur de ces volets, ceci étant dû principalement aux problèmes d'écoulement de gomme dans des interstices peu épais. Par ailleurs, le démoulage des volets flexibles à parois inclinées s'avère difficile et risque de déchirer les volets. De surcroît, les fentes étant séparées de la paroi latérale du sillon d'une distance comprise généralement entre 0,1 et 0,2 mm, ceci impose des tolérances de fabrication et de montage desdits inserts qui s'avèrent être très contraignantes.

Le document US 5800642 - A divulgue un procédé de fabrication de bande de roulement de pneumatique en mélange de caoutchouc, ladite bande de roulement comportant une surface de roulement, un sillon ayant une paroi de fond et deux parois latérales s'étendant à partir de la paroi de fond en direction de la surface de roulement, et une paroi flexible agencée dans ledit sillon de manière à pouvoir fléchir lors d'un écoulement de liquide, ledit procédé comportant une étape de moulage de la bande de roulement avec un sillon et un élément de connexion d'épaisseur égale à celle de ladite paroi qui est agencé à l'intérieur du sillon, transversalement à l'axe longitudinal de ce dernier, de manière à ce que, après vulcanisation, ledit élément de connexion relie lesdites parois latérales avec ladite paroi de fond sur une profondeur donnée à partir de cette dernière.

La ou les parois flexibles restent liées au fond et aux parois latérales des ranures.

Les buts de l'invention sont de remédier au moins en partie à ces inconvénients et de proposer un procédé amélioré de fabrication des parois flexibles pour pneumatiques et des moyens de mise en oeuvre de ce procédé permettant d'obtenir des parois flexibles de bonne qualité, de manière économique.

Ces buts sont atteints avec un procédé de fabrication de bande de roulement de pneumatique en mélange de caoutchouc comme défini dans la revendication 1, ladite bande de roulement comportant une surface de roulement, au moins un sillon ayant une paroi de fond et deux parois latérales s'étendant à partir de la paroi de fond en direction de la surface de roulement, et au moins une paroi flexible agencée dans ledit sillon de manière à pouvoir fléchir lors d'un écoulement de liquide, ledit procédé comportant les étapes suivantes :
- moulage de la bande de roulement avec au moins un sillon et au moins un élément de connexion d'épaisseur égale à celle de ladite paroi qui est agencé à l'intérieur dudit sillon, transversalement à l'axe longitudinal de ce dernier, de manière à ce que, après vulcanisation, ledit élément de connexion relie lesdites parois latérales avec ladite paroi de fond sur une profondeur donnée à partir de cette dernière ;
- découpage dudit élément de connexion au niveau de sa jonction avec chacune des parois latérales dudit sillon de manière à obtenir ladite paroi flexible.

De cette manière, il est possible de réaliser facilement lesdits éléments de connexion lors d'une première étape de fabrication par moulage et cuisson de la bande de roulement puis, lors d'une deuxième étape de fabrication, de découper leurs flancs, à l'aide de moyens adaptés, sans avoir à subir les inconvénients cités ci-dessus. En effet, il est plus aisé de mouler plusieurs éléments de connexion rattachés aux sillons en même temps que l'on réalise le moulage de ces derniers, puis d'effectuer la dissociation latérale des jonctions les reliant aux parois latérales des sillons. Ceci présente l'avantage de pouvoir utiliser un moule plus simple à réaliser et plus robuste, de faciliter le moulage et d'obtenir des parois flexibles de forme bien définie, sans présenter des déchirures et étant ainsi aptes à bien fermer le sillon sur sol sec et à bien fléchir autour de leur base sur sol humide. Ce procédé se prête encore mieux à la réalisation de telles parois flexibles dans des sillons ayant des parois latérales inclinées par rapport à la base des sillons, car la séparation au niveau des jonctions avec les parois latérales des sillons des éléments de connexion ne peut se faire que par une étape de découpage des liens, car une séparation lors du démoulage risque de déchirer la paroi flexible ainsi obtenue. Des formes préférentielles du procédé selon l'invention sont définies dans les revendications 2 à 13.

De préférence, ledit découpage se fait à l'aide d'un outil coupant prenant appui sur la paroi latérale dudit sillon. Un tel outil coupant prend appui sur la paroi latérale du sillon, plus massive, donc plus rigide que celle de l'élément de connexion, ce qui permet de bien dégager latéralement le sillon, tout en obtenant une coupe nette au niveau des bords de la paroi flexible ainsi réalisée.

Avantageusement, ledit outil coupant est solidaire d'un dispositif de guidage le long de ladite paroi latérale. Ceci permet de positionner rapidement l'outil coupant avant et lors du découpage de la jonction de l'élément de connexion, et ceci pour tous les éléments d'un même sillon.

De préférence, ledit outil coupant est un couteau tranchant. Ceci permet le découpage sans enlèvement de matière des liens entre l'élément de connexion et les parois latérales du sillon et d'obtenir ainsi une meilleure fermeture du sillon sur sol sec, pour une meilleure efficacité dans l'atténuation du bruit de roulage.

Dans une variante de réalisation de l'invention, ledit outil coupant est un couteau chaud. Un tel couteau est chauffé par effet Joule lors de son alimentation en électricité et permet de couper plus rapidement les jonctions de gomme reliant la paroi flexible aux parois latérales du sillon.

Dans une autre variante de réalisation de l'invention, ledit outil coupant est un outil profilé. Ceci permet de réaliser un découpage selon un profil donné, qui est généralement celui des parois latérales du sillon, des jonctions des parois flexibles obtenues.

Dans encore une autre variante de réalisation de l'invention, ledit outil coupant est une lame circulaire rotative. Une telle lame circulaire rotative permet de couper plus rapidement les jonctions desdits éléments de connexion.

De préférence, ladite lame circulaire rotative est entraînée en rotation à une vitesse comprise entre 5000 et 30000 tr/min.

Avantageusement, ledit sillon est circonférentiel et le procédé comprend une étape supplémentaire de montage du pneumatique comportant ladite bande de roulement sur un dispositif d'entraînement en rotation dudit pneumatique. Un tel entraînement en rotation, le pneu entraîné étant de préférence préalablement gonflé pour plus de rigidité, permet d'amener rapidement les éléments de connexion devant l'outil coupant et répond à un problème de gain de productivité. De préférence, la vitesse de rotation du pneumatique est comprise entre 0,1 et 10 tr/min.

Dans encore une autre variante de réalisation de l'invention, ledit découpage se fait à l'aide d'un dispositif de découpage au laser. Un tel dispositif de découpage au laser utilise un faisceau laser focalisé et déplacé selon une tangente à la paroi latérale au niveau de la jonction avec cette paroi de l'élément de connexion. Ce dispositif a comme avantage de pouvoir positionner et piloter facilement le point de focalisation afin d'obtenir une bonne qualité de coupe.

Dans une variante supplémentaire de réalisation de l'invention, ledit découpage se fait à l'aide d'un dispositif de découpage au jet d'eau. Un tel dispositif de découpage permet de réaliser rapidement des découpages propres et de bonne qualité lorsque la ligne de focalisation du jet d'eau est pilotée de manière à pouvoir suivre au plus près la tangente à la paroi latérale du sillon et à la paroi de fond du sillon.

Avantageusement, on procède au découpage concomitant des liaisons d'un élément de connexion aux parois latérales dudit sillon. Ainsi, de par la rigidité des parois latérales du sillon, deux outils de coupe peuvent travailler simultanément, ce qui permet de gagner du temps et d'obtenir une paroi flexible ayant des bords découpés de bonne qualité.

De préférence, la fente obtenue après le découpage a une épaisseur inférieure à 0,5mm et de préférence inférieure à 0,2mm. L'épaisseur de la fente qui sépare les bords de la paroi flexible des parois latérales du sillon est très fine, voire nulle lorsque l'on utilise des outils tranchants, ce qui permet une bonne fermeture du sillon par la paroi flexible ainsi obtenue.

Avantageusement, la largeur (e) de ladite paroi flexible est comprise entre 0,2 et 2mm. Une telle paroi flexible permet d'obtenir une bonne atténuation du bruit de roulement d'un pneu de tourisme.

Les buts de l'invention sont également atteints avec un moule pour pneumatique pour la mise en oeuvre du procédé l'invention comme défini dans la revendication 14, ledit moule comprenant au moins un élément de garniture qui comporte une base et au moins un cordon, ledit cordon étant interrompu par une entaille transversale d'épaisseur sensiblement égale à celle dudit élément de connexion, ladite entaille traversant de part en part ledit cordon, le moule étant caractérisé en ce qu'il comprend au moins deux éléments de garniture adjacents comportant chacun une base et au moins un cordon, au moins l'un des cordons du premier élément de garniture ayant une largeur inférieure à celle de sa base de manière à ménager ladite entaille transversale entre l'une des faces latérales externes dudit cordon et la face latérale externe en vis-à-vis du cordon du deuxième élément de garniture.

Un tel moule présente l'avantage d'être facile à fabriquer, notamment en pratiquant une entaille traversant de part et part le cordon d'un élément de garniture (par cordon on comprend une partie en relief du moule permettant le moulage du sillon de la bande de roulement), et ceci jusqu'au niveau de sa base.

De surcroît, en plaçant une telle entaille entre deux éléments de garniture adjacents, on arrive à réaliser avantageusement par moulage les éléments de connexion de l'invention, un tel élément de connexion étant obtenu au niveau de la jonction de deux éléments de garniture en modifiant la largeur du cordon d'un seul élément de garniture ou celle des cordons des deux éléments de garniture adjacents. Ceci permet de réaliser encore plus rapidement un tel moule, pour un coût plus avantageux, tout en permettant des tolérances de fabrication des cordons moins strictes au niveau de leur largeur.

La description qui suit s'appuie sur les figures 1 à 9b dans lesquelles:
- la figure 1 représente la vue schématique partielle d'un pneumatique comportant des parois flexibles disposées dans les sillons circonférentiels,
- les figures 2a, 2b (2a est une vue en coupe et 2b une vue de dessus) et 3 (vue en coupe) illustrent les étapes de fabrication de paroi flexible selon l'invention ;
- la figure 4 illustre un exemple de positionnement d'un outil coupant par rapport à la bande de roulement d'un pneu lors de la fabrication d'une paroi flexible selon l'invention ;
- la figure 5 illustre une vue en perspective d'un exemple d'élément de garniture faisant partie d'un moule pour pneumatique utilisé pour la mise en oeuvre du procédé de l'invention ;
- la figure 6 est une vue schématique partielle d'un pneumatique comportant un dispositif de coupe disposé dans un de ses sillons en vue de réaliser le découpage d'une paroi flexible ;
- la figure 7 est une vue en perspective d'un dispositif de coupe de la figure 6;
- la figure 8a représente une vue schématique en perspective d'un pneumatique et d'un dispositif de découpage à faisceau laser ; les figures 8b et 8c représentent par une vue en coupe radiale et une vue en perspective le découpage de la paroi flexible par le faisceau laser ;
- la figure 9a représente une vue schématique en perspective d'un pneumatique et d'un dispositif de découpage à jet d'eau et la figure 9b est une vue en coupe radiale d'un montrant la position du jet d'eau par rapport à la paroi flexible.

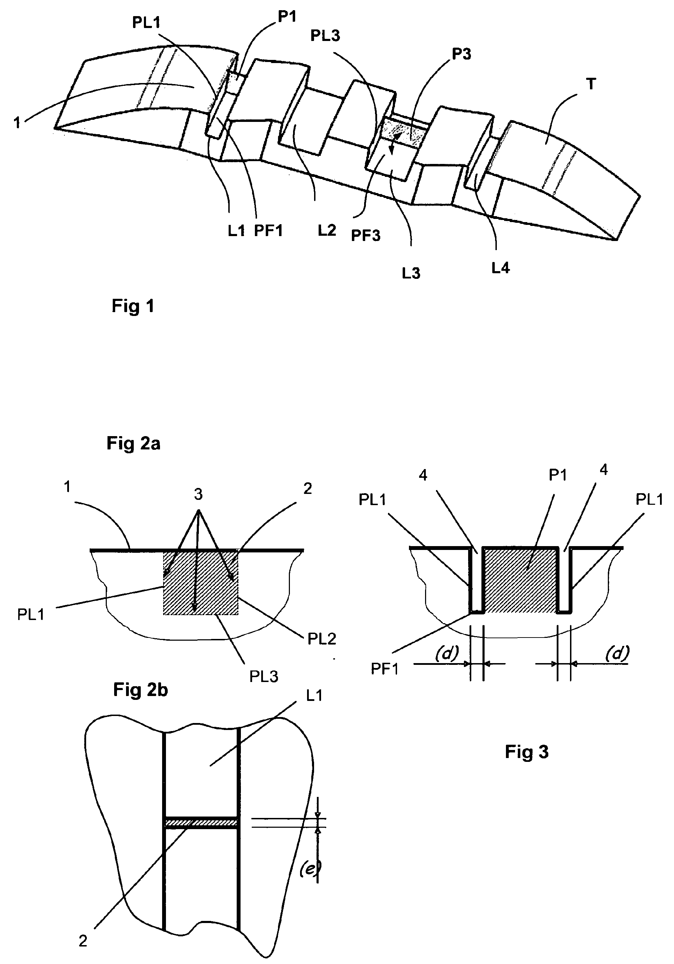

La portion de pneumatique T représentée à la figure 1 comprend une pluralité de sillons L1, L2, L3 et L4 s'étendant dans la direction circonférentielle de la bande de roulement. A titre d'exemple, deux de ces sillons L1 et L3 sont équipés de parois flexibles P1, P3. Ces parois sont articulées solidairement à la paroi de fond PF1, PF3 du sillon L1, L3 et s'inclinent alternativement autour de cette liaison selon les directions indiquées par la flèche à double sens figurées au-dessus de la paroi flexible P du sillon L3. Les parois flexibles P1, P3 s'étendent depuis le fond du sillon L1 ou L3 jusqu'à la surface de roulement 1, ils ont donc une hauteur égale à celle du sillon L1, L3 (bien que, dans une variante, une paroi flexible d'hauteur inférieure à celle du sillon pourrait être envisagée).

Les figures 2a et 2b illustrent un sillon L1 comportant un élément de jonction 2 d'épaisseur (e) obtenu par moulage en même temps que le sillon L1. L'élément de connexion 2 est agencé transversalement à l'axe longitudinal du sillon L1 et présente des jonctions 3 avec chacune des parois latérales PL1 et avec la paroi de fond PF1 du sillon L1.

La figure 3 illustre une paroi flexible P1 obtenue après découpage de l'élément de connexion 2 des figures précédentes au niveau des jonctions 3 le reliant aux parois latérales PL1. Une paroi flexible P1 est ainsi séparée des parois latérales PL1 par deux entailles 4, tout en restant liée par sa base à la paroi de fond PF1 du sillon L1. Les entailles (d) ont une faible épaisseur, pouvant aller de 0 à 0,5 mm, en fonction de l'outil de coupe utilisé et elles s'étendent jusqu'à la paroi de fond PF1. En fonctionnement, la paroi flexible ainsi obtenue reste dans la position initiale verticale (telle que visible à la figure 3) sur sol sec et ferme le sillon et, lorsque le pneumatique roule sur un sol mouillé, elle fléchit autour de sa base pour ouvrir le sillon et permettre l'évacuation de l'eau à l'extérieur de celui-ci.

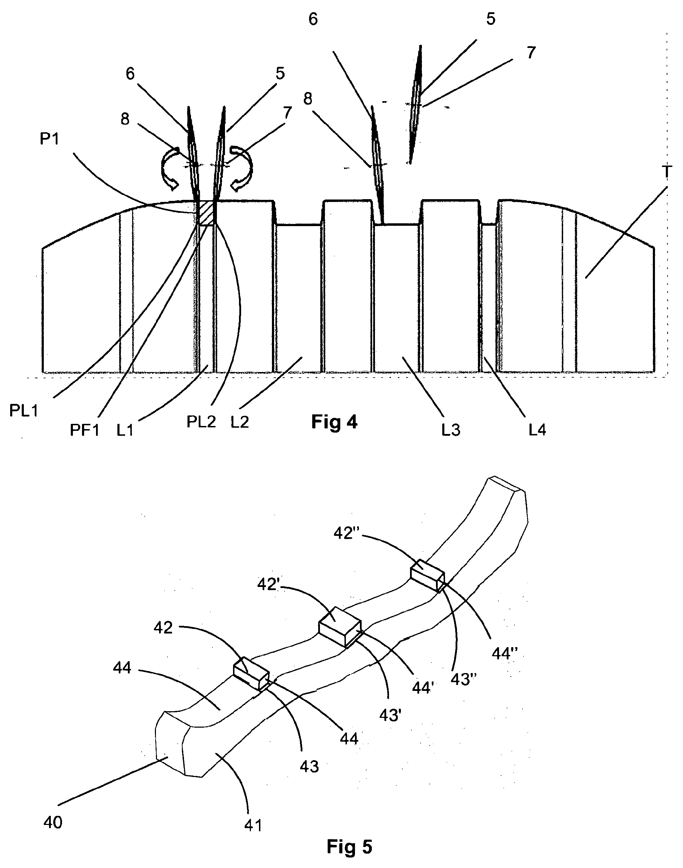

La figure 4 illustre un exemple de réalisation et de positionnement des outils de coupe des jonctions avec les parois latérales des éléments de connexion 2 au sein d'un pneumatique T. Dans cet exemple, les outils de coupe 5, 6 sont des lames circulaires comprenant des moyens d'entraînement en rotation (non représentés) autour de leur axe central 7, 8. Les lames circulaires rotatives 5,6 ont un rayon supérieur à la profondeur du sillon et sont positionnées de manière à effectuer une coupe selon une direction tangentielle à la paroi latérale dudit sillon, leur tranchant prenant appui contre la paroi latérale PL1 du sillon L1, tout en veillant à ne pas entailler la paroi de fond du sillon.

Les outils illustrés au niveau du sillon L3 sur la figure 4 sont représentés en position d'approche de la coupe, l'un au-dessus du sillon en position inclinée de manière à ce que son bord tranchant soit parallèle à la paroi latérale du sillon et l'autre en position descendue au fond du sillon. Les mêmes outils de coupe 5, 6 sont représentés en position de travail au niveau du sillon L1.

Lorsque les sillons L1 à L4 sont circonférentiels, le pneumatique T est avantageusement entraîné en rotation autour de son axe central, en étant monté sur un dispositif qui lui assure en même temps le gonflage pour plus de rigidité. A titre d'exemple, le pneumatique peut tourner à une vitesse comprise entre 0,1 et 10 tours/min et les lames circulaires à une vitesse comprise entre 5000 et 30000 tours/min.

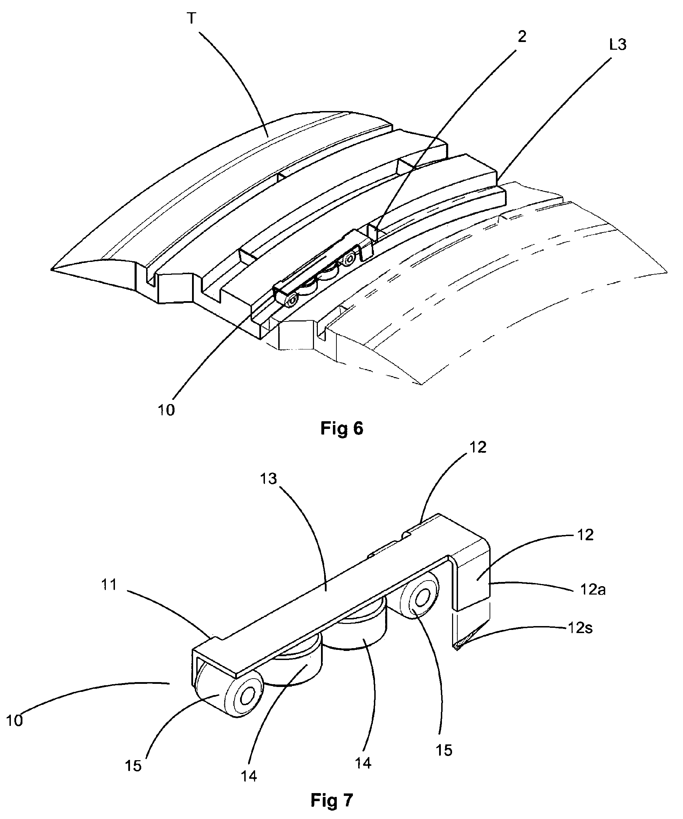

La figure 6 illustre un autre exemple de réalisation des parois flexibles selon l'invention où un dispositif de coupe 10 est agencé dans le sillon L3 d'une portion de pneumatique T. Le dispositif de coupe 10 est mieux visible à la figure 7 et comprend un cadre 11 de largeur inférieure à celle du sillon L3 de manière à pouvoir se déplacer à l'intérieur de ce dernier. Le cadre 11 comprend, en sa partie supérieure, une entretoise 13 parallèle à la paroi de fond du sillon L3. L'entretoise 13 supporte deux couteaux 12 à son extrémité avant suivis de deux galets de poussée 15 du dispositif de coupe 10 à l'intérieur du sillon L3 qui encadrent deux galets de guidage 14. Le dispositif de coupe 10 peut être déplacé dans les sillons d'un pneu fixe ou, comme dans l'exemple précédent, dans les sillons d'un pneu entraîné en rotation et, de préférence, gonflé.

Les couteaux 12 font saillie vers le fond du sillon à partir de l'entretoise 13 et sont agencés de manière à ce que leur arrête tranchante 12a soit parallèle à la paroi latérale du sillon. Les couteaux 12 ont une section transversale 12s de forme triangulaire (tel qu'illustré en partie inférieure du couteau de la figure 7), la pointe étant orientée vers l'avant tel que vu dans la direction de déplacement du dispositif de coupe 10 dans le sillon.

Chaque galet de guidage 14 est monté et tourne librement autour de son axe vertical, qui est perpendiculaire au plan de l'entretoise 13, lorsqu'il vient au contact d'une paroi latérale du sillon et assure ainsi le guidage des couteaux 12 par rapport à la paroi. Le diamètre des galets 14 et leur positionnement sont choisis de manière à ce que chaque galet puisse tourner librement autour de son axe au contact de la paroi. Des systèmes élastiques de compensation peuvent également être prévus afin de pousser les galets au contact de la paroi ou des parois latérales lors du déplacement du dispositif le long du sillon.

Le dispositif de coupe 11 comprend par ailleurs des galets de poussée 15 qui tournent chacun librement autour d'un axe parallèle au plan de l'entretoise 13. Les galets de poussée 15 prennent appui au fond du sillon et permettent le déplacement du dispositif de coupe 11 et le pivotement des parois flexibles P vers le fond du sillon une fois les jonctions avec les parois latérales découpées.

Dans une variante de réalisation du dispositif de coupe 11, les couteaux tranchants 12 sont remplacés par des couteaux chauffants (non représentés sur les dessins) qui produisent de la chaleur par effet Joule en étant connectés à une source d'alimentation en énergie électrique et réglés par un thermostat. Les parties chauffantes sont alors des lames de section constante ayant une épaisseur d'environ 0,5 mm réalisés en un matériau résistif ou des fils résistifs ayant un diamètre d'environ 0,5 mm.

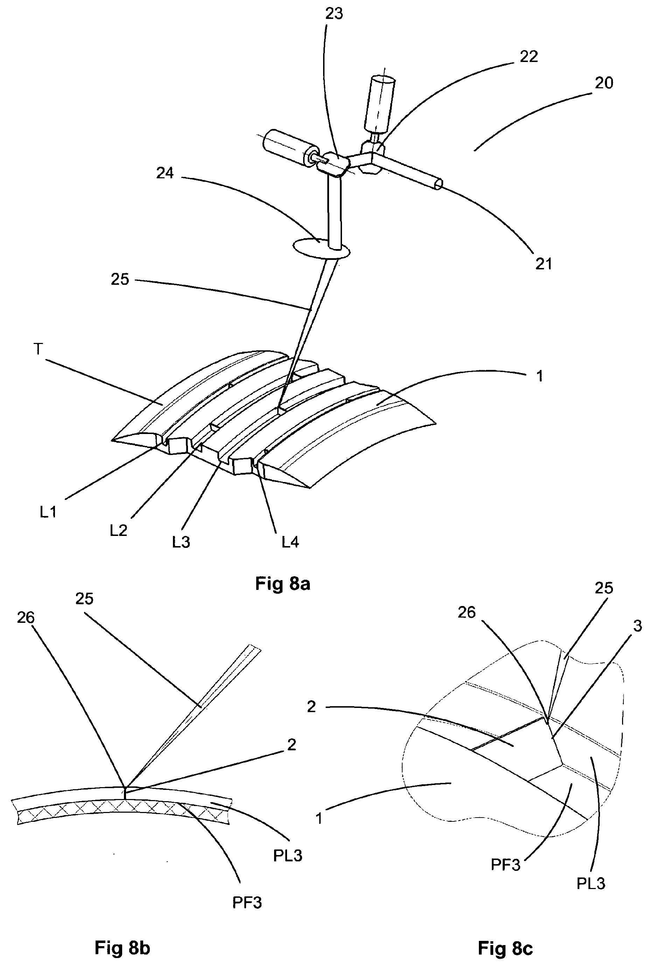

Dans un autre exemple de réalisation de l'invention et tel que mieux visible aux figures 8a à 8c, le découpage des jonctions 3 avec les parois latérales PL3 des éléments de connexion 2 est réalisé à l'aide d'un dispositif de découpage au laser 20. Un tel dispositif comprend une source laser (non représentée sur les dessins) qui envoie un faisceau laser non focalisé 21en direction d'un premier miroir galvanométrique 22. Le miroir 22 redirige le faisceau reçu vers un deuxième miroir galvanométrique 23 qui le transmet à une lentille de focalisation 24. Le diamètre du faisceau incident et le réglage de la distance focale déterminent l'épaisseur de la fente résultant après découpe des jonctions 3 de l'élément de connexion 2, la largeur (d) de cette fente étant d'environ 0,1 mm. Le dispositif de découpage au faisceau laser 20 comprend également une unité de pilotage (du type à commande numérique à trois dimensions) qui permet, après référencement, le déplacement du point de focalisation 26 du faisceau laser focalisé 25 le long de la jonction 3 de l'élément de connexion 2 avec la paroi latérale PL3 du sillon L3. Le faisceau laser 25 est dirigé tangentiellement le long de la paroi latérale PL3, et il est incliné (selon un angle aigu) avec le plan de la paroi de fond du sillon L3. Ainsi, en choisissant la distance focale de manière à ce que le point de focalisation soit situé au niveau de la jonction 3 à découper, ainsi que le pilotage précis du déplacement du point focal 26 du faisceau laser 25 le long de la paroi latérale PL3 du sillon, on obtient un découpage précis, net et rapide des jonctions 3, et donc une paroi flexible de dimensions exactes.

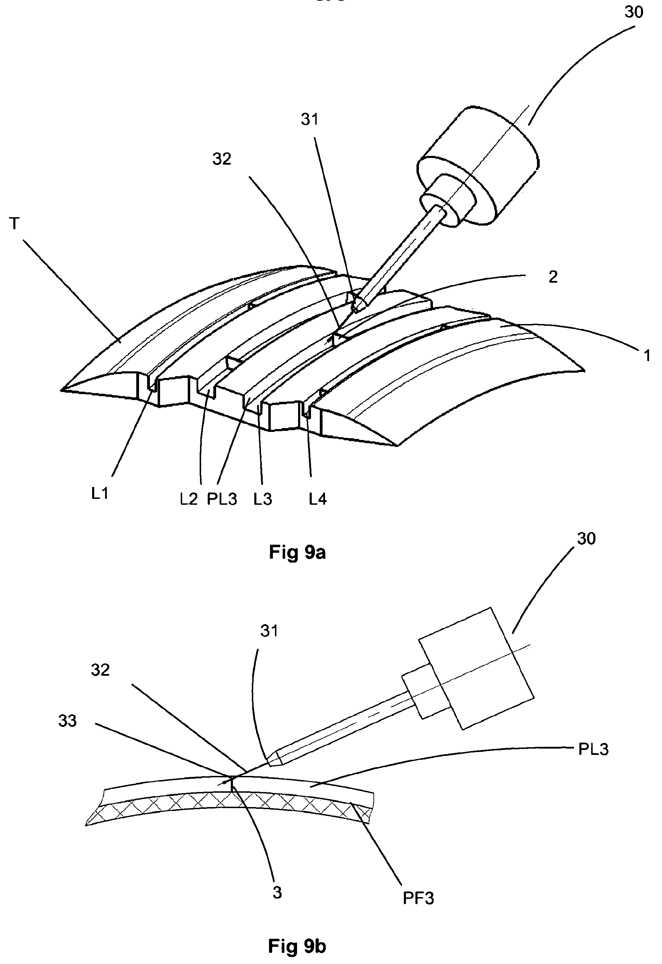

Dans un autre exemple de réalisation de l'invention et tel que mieux visible aux figures 9a et 9b, le découpage des jonctions 3 avec les parois latérales PL3 des éléments de connexion 2 est réalisé à l'aide d'un dispositif de découpage au jet d'eau 30. Le pilotage du déplacement de la ligne de focalisation 33 du jet d'eau 32 est programmable en trois dimensions le long de la jonction 3 à découper. la ligne de focalisation 33 du jet d'eau 32 est dirigée le long de la paroi latérale PL3 selon une direction qui se rapproche le plus de la tangente à la paroi latérale et selon la tangente à la paroi de fond du sillon. Le dispositif de découpage à jet d'eau 30 comprend une buse de focalisation 31 de petit diamètre, par exemple inférieur à 0,2 mm, et qui est située au plus près de la jonction à découper. Le contrôle de la pression du jet d'eau 32, du diamètre de la buse et du déplacement de la ligne de focalisation 33 permettent d'obtenir un découpage précis et rapide des jonctions 3, sans entailles ou découpes des zones avoisinantes. Ainsi, et tel que mieux visible à la figure 9b, la ligne de focalisation du jet d'eau est telle qu'en sortant de la zone de coupe, le jet d'eau soit défocalisé et hors matière, de manière à limiter son action de coupe à la jonction 3 et à empêcher la coupe des zones avoisinantes. Pour des buses de grand diamètre dont l'orientation idéale par rapport à la paroi est difficile à atteindre, et afin d'éviter d'entailler le fond du sillon, la coupe est arrêtée peu avant d'atteindre la paroi de fond du sillon. Le jet d'eau utilisé ne contient pas d'abrasif, l'élément de connexion 2 étant en un mélange de caoutchouc, ses jonctions avec la paroi latérale du sillon sont faciles à découper.

Comme dans les exemples précédents, le pneumatique peut être entraîné en rotation et de préférence gonflé pendant le découpage des jonctions 3 avec le dispositif de découpage à faisceau laser 20 ou avec le dispositif de découpage au jet d'eau 30.

La figure 5 illustre un élément de garniture 40 faisant partie d'un moule pour pneumatique utilisé pour la mise en oeuvre du procédé de l'invention. Plusieurs éléments de garniture sont disposés circonferentiellement, en étant agencés côte-à-côte, et sont destinés à former l'empreinte de la bande de roulement du pneumatique. L'élément de garniture 40 comporte une base 41, dont la surface supérieure 44 assure le moulage de la surface de roulement 1, et à partir de laquelle font saillie plusieurs cordons 42, 42', 42". Les cordons 42, 42', 42" permettent le moulage des sillons, par exemple les sillons L1, L2, L3 de la figure 1, au sein de la bande de roulement. Selon l'invention, les cordons 42, 42', 42" sont interrompus en pratiquant plusieurs entailles transversales 43, 43', 43" (on comprend qu'elles sont perpendiculaires à la direction longitudinale des cordons) à un endroit prédéterminé sur la largeur desdits cordons. De telles entailles permettent le moulage des éléments de connexion 3 en liaison avec les parois latérales des sillons.

Dans l'exemple illustré à la figure 5, les cordons 42, 42', 42" de l'élément de garniture 40 ont une largeur inférieure à celle de sa base 41 de manière à ménager lesdites entailles transversales 43, 43', 43" entre l'une des faces latérales externes 44, 44', 44" dudit cordon 42, 42', 42" et la face latérale externe en vis-à-vis du cordon de l'élément de garniture adjacent. Ainsi, les entailles transversales 43,43',43" sont avantageusement réalisées à l'extrémité des cordons 42, 42', 42"et assurent le montage des éléments de garniture au sein d'un moule en englobant les éventuels jeux pouvant exister entre les cordons des deux éléments de garniture adjacents, ce qui permet d'éviter l'apparition des bavures après vulcanisation.

D'autres variantes et modes de réalisation de l'invention peuvent être envisagés sans sortir du cadre de ces revendications.

## Revendications

1. Procédé de fabrication de bande de roulement de pneumatique (T) en mélange de caoutchouc, ladite bande de roulement comportant une surface de roulement (1), au moins un sillon (L1, L3) ayant une paroi de fond (PF1, PF3) et deux parois latérales (PL1, PL3) s'étendant à partir de la paroi de fond en direction de la surface de roulement, et au moins une paroi flexible (P1, P3) agencée dans ledit sillon de manière à pouvoir fléchir lors d'un écoulement de liquide, ledit procédé comportant les étapes suivantes :
- moulage de la bande de roulement avec au moins un sillon (L1, L3) et au moins un élément de connexion (2) d'épaisseur égale à celle de ladite paroi (PL1, PL3) qui est agencé à l'intérieur dudit sillon (L1, L3), transversalement à l'axe longitudinal de ce dernier, de manière à ce que, après vulcanisation, ledit élément de connexion (2) relie lesdites parois latérales (PL1, PL3) avec ladite paroi de fond (PF1, PF3) sur une profondeur donnée à partir de cette dernière ;
- découpage dudit élément de connexion (2) au niveau de sa jonction (3) avec chacune des parois latérales (PL1, PL3) dudit sillon de manière à obtenir ladite paroi flexible (P1, P3).

2. Procédé selon la revendication 1, **caractérisé en ce que** ledit découpage se fait à l'aide d'un outil coupant (5, 6 ; 12) prenant appui sur la paroi latérale (PL1, PL3) dudit sillon.

3. Procédé selon la revendication 2, **caractérisé en ce que** ledit outil coupant (12) est solidaire d'un dispositif de guidage (10) le long de ladite paroi latérale (PL1, PL3).

4. Procédé selon l'une des revendications 1 à 3, **caractérisé en ce que** ledit outil coupant est un couteau tranchant.

5. Procédé selon l'une des revendications 1 à 3, **caractérisé en ce que** ledit outil coupant est un couteau chaud.

6. Procédé selon l'une des revendications 1 à 3, **caractérisé en ce que** ledit outil coupant est un outil profilé.

7. Procédé selon l'une des revendications 1 à 3, **caractérisé en ce que** ledit outil coupant est une lame circulaire rotative (5,6).

8. Procédé selon la revendication 7, **caractérisé en ce que** ladite lame circulaire rotative est entraînée en rotation à une vitesse comprise entre 5000 et 30000 tr/min.

9. Procédé selon l'une des revendications précédentes, **caractérisé en ce que** ledit sillon (L1,L3) est circonférentiel et **en ce que** le procédé comprend une étape supplémentaire de montage du pneumatique comportant ladite bande de roulement sur un dispositif d'entraînement en rotation dudit pneumatique.

10. Procédé selon la revendication 1, **caractérisé en ce que** ledit découpage se fait à l'aide d'un dispositif de découpage au laser (20).

11. Procédé selon la revendication 1, **caractérisé en ce que** ledit découpage se fait à l'aide d'un dispositif de découpage au jet d'eau (30).

12. Procédé selon l'une des revendications précédentes, **caractérisé en ce que** l'on procède au découpage concomitant des deux jonctions (3) reliant l'un desdits éléments de connexion (2) aux parois latérales (PL1,PL3) dudit sillon (L1,L3).

13. Procédé selon l'une des revendications précédentes, **caractérisé en ce que** la fente obtenue après le découpage a une épaisseur inférieure à 0,5mm et de préférence inférieure à 0,2mm.

14. Moule pour pneumatique pour la mise en oeuvre du procédé selon les revendications 1 à 13, ledit moule comprenant au moins un élément de garniture (40) qui comporte une base (41) et au moins un cordon (42, 42', 42"), ledit cordon étant interrompu par une entaille transversale (43, 43', 43") d'épaisseur sensiblement égale à celle dudit élément de connexion (2), ladite entaille traversant de part en part ledit cordon, **caractérisé en ce qu'**il comprend au moins deux éléments de garniture adjacents comportant chacun une base et au moins un cordon, au moins l'un des cordons (42, 42', 42") du premier élément de garniture ayant une largeur inférieure à celle de sa base (41) de manière à ménager ladite entaille transversale (43, 43', 43") entre l'une des faces latérales externes (44, 44', 44") dudit cordon (42, 42', 42") et la face latérale externe en vis-à-vis du cordon du deuxième élément de garniture.

## Patentansprüche

1. Verfahren zur Herstellung eines Luftreifen-Laufstreifens (T) aus einer Kautschukmischung, wobei der Laufstreifen eine Lauffläche (1), mindestens eine Rille (L1, L3), die eine Bodenwand (PF1, PF3) und zwei Seitenwände (PL1, PL3) hat, die sich ausgehend von der Bodenwand in Richtung der Lauffläche erstrecken, und mindestens eine elastische Wand (P1, P3) aufweist, die so in der Rille angeordnet ist, dass sie beim Fließen einer Flüssigkeit nachgeben kann, wobei das Verfahren die folgenden Schritte aufweist:
- Formen des Laufstreifens mit mindestens einer Rille (L1, L3) und mindestens einem Verbindungselement (2) einer Dicke gleich derjenigen der Wand (PL1, PL3), das innerhalb der Rille (L1, L3) quer zu deren Längsachse so angeordnet ist, dass das Verbindungselement (2) nach der Vulkanisierung die Seitenwände (PL1, PL3) mit der Bodenwand (PF1, PF3) über eine gegebene Tiefe ausgehend von dieser letzteren verbindet;
- Zerschneiden des Verbindungselements (2) im Bereich seiner Verbindung (3) mit jeder der Seitenwände (PL1, PL3) der Rille, um die biegsame Wand (P1, P3) zu erhalten.

2. Verfahren nach Anspruch 1, **dadurch gekennzeichnet, dass** das Zerschneiden mit Hilfe eines Schneidwerkzeugs (5, 6; 12) erfolgt, das sich auf der Seitenwand (PL1, PL3) der Rille abstützt.

3. Verfahren nach Anspruch 2, **dadurch gekennzeichnet, dass** das Schneidwerkzeug (12) fest mit einer Führungsvorrichtung (10) entlang der Seitenwand (PL1, PL3) verbunden ist.

4. Verfahren nach einem der Ansprüche 1 bis 3, **dadurch gekennzeichnet, dass** das Schneidwerkzeug ein scharfes Messer ist.

5. Verfahren nach einem der Ansprüche 1 bis 3, **dadurch gekennzeichnet, dass** das Schneidwerkzeug ein heißes Messer ist.

6. Verfahren nach einem der Ansprüche 1 bis 3, **dadurch gekennzeichnet, dass** das Schneidwerkzeug ein Profilwerkzeug ist.

7. Verfahren nach einem der Ansprüche 1 bis 3, **dadurch gekennzeichnet, dass** das Schneidwerkzeug ein drehbares Kreismesser (5, 6) ist.

8. Verfahren nach Anspruch 7, **dadurch gekennzeichnet, dass** das drehbare Kreismesser mit einer Geschwindigkeit zwischen 5000 und 30000 U/min in Drehung versetzt wird.

9. Verfahren nach einem der vorhergehenden Ansprüche, **dadurch gekennzeichnet, dass** die Rille (L1, L3) eine Umfangsrille ist, und dass das Verfahren einen zusätzlichen Schritt der Montage des den Laufstreifen aufweisenden Luftreifens auf eine Vorrichtung zum Drehantrieb des Luftreifens enthält.

10. Verfahren nach Anspruch 1, **dadurch gekennzeichnet, dass** das Zerschneiden mit Hilfe einer Laserschneidevorrichtung (20) erfolgt.

11. Verfahren nach Anspruch 1, **dadurch gekennzeichnet, dass** das Zerschneiden mit Hilfe einer Wasserstrahlschneidevorrichtung (30) erfolgt.

12. Verfahren nach einem der vorhergehenden Ansprüche, **dadurch gekennzeichnet, dass** das Zerschneiden der eines der Verbindungselemente (2) mit den Seitenwänden (PL1, PL3) der Rille (L1, L3) verbindenden zwei Verbindungen (3) gleichzeitig durchgeführt wird.

13. Verfahren nach einem der vorhergehenden Ansprüche, **dadurch gekennzeichnet, dass** der nach dem Zerschneiden erhaltene Schlitz eine Dicke von weniger als 0,5mm und vorzugsweise weniger als 0,2mm hat.

14. Formwerkzeug für Luftreifen zur Durchführung des Verfahrens nach den Ansprüchen 1 bis 13, wobei das Formwerkzeug mindestens ein Einsatzelement (40) enthält, das eine Basis (41) und mindestens einen Wulst (42, 42', 42") aufweist, wobei der Wulst durch einen Quereinschnitt (43, 43', 43") einer Dicke im Wesentlichen gleich derjenigen des Verbindungselements (2) unterbrochen wird, wobei der Einschnitt den Wulst von einer Seite zur anderen durchquert, **dadurch gekennzeichnet, dass** es mindestens zwei benachbarte Einsatzelemente enthält, die je eine Basis und mindestens einen Wulst aufweisen, wobei mindestens einer der Wülste (42, 42', 42") des ersten Einsatzelements eine geringere Breite als diejenige seiner Basis (41) hat, um den Quereinschnitt (43, 43', 43") zwischen einer der äußeren Seitenflächen (44, 44', 44") des Wulsts (42, 42', 42") und der dem Wulst des zweiten Einsatzelements gegenüberliegenden äußeren Seitenfläche auszusparen.

## Claims

1. Method of manufacturing a tread of a tyre (T) made of rubber compound, the said tread comprising a tread surface (1), at least one groove (L1, L3) having a bottom wall (PF1, PF3) and two lateral walls (PL1, PL3) extending from the bottom wall towards the tread surface, and at least one flexible wall (P1, P3) arranged in the said groove in such a way as to be able to flex as liquid flows, the said method comprising the following steps :
- moulding the tread with at least one groove (L1, L3) and at least one connecting element (2) of a thickness equal to that of the said wall (PL1, PL3) which element is arranged inside the said groove (L1, L3) transversely to the longitudinal axis thereof, so that, after vulcanizing, the said connecting element (2) connects the said lateral walls (PL1, PL3) to the said bottom wall (PF1, PF3) over a given depth from the latter;
- cutting the said connecting element (2) at its junction (3) with each of the lateral walls (PL1, PL3) of the said groove so as to obtain the said flexible wall (P1, P3).

2. Method according to Claim 1, **characterized in that** the said cutting is performed using a cutting tool (5, 6; 12) resting against the lateral wall (PL1, PL3) of the said groove.

3. Method according to Claim 2, **characterized in that** the said cutting tool (12) is secured to a guide device (10) providing guidance along the said lateral wall (PL1, PL3).

4. Method according to one of Claims 1 to 3, **characterized in that** the said cutting tool is a cutting knife.

5. Method according to one of Claims 1 to 3, **characterized in that** the said cutting tool is a hot knife.

6. Method according to one of Claims 1 to 3, **characterized in that** the said cutting tool is a profiled tool.

7. Method according to one of Claims 1 to 3, **characterized in that** the said cutting tool is a rotary circular blade (5,6).

8. Method according to Claim 7, **characterized in that** the said rotary circular blade is driven in rotation at a speed of between 5000 and 30000 rpm.

9. Method according to one of the preceding claims, **characterized in that** the said groove (L1, L3) is circumferential and **in that** the method comprises an additional step of mounting the tyre comprising the said tread on a device that rotates the said tyre.

10. Method according to Claim 1, **characterized in that** the said cutting is performed using a laser cutting device (20).

11. Method according to Claim 1, **characterized in that** the said cutting is performed using a water jet cutting device (30).

12. Method according to one of the preceding claims, **characterized in that** the two junctions (3) that connect one of the said connecting elements (2) to the lateral walls (PL1,PL3) of the said groove (L1 ,L3) are cut together.

13. Method according to one of the preceding claims, **characterized in that** the slit obtained after cutting has a thickness less than 0.5 mm and preferably less than 0.2 mm.

14. Tyre mould for implementing the method according to Claims 1 to 13, the said mould comprising at least one liner element (40) which comprises a base (41) and at least one moulding rib (42, 42', 42"), the said moulding rib being interrupted by a transverse notch (43, 43', 43") of a thickness substantially equal to that of the said connecting element (2), the said notch passing right through the said moulding rib, **characterized in that** it comprises at least two adjacent liner elements each one comprising a base and at least one moulding rib, at least one of the moulding ribs (42, 42', 42") of the first liner element having a width less than that of its base (41) so as to form the said transverse notch (43, 43', 43") between one of the external lateral faces (44, 44', 44") of the said moulding rib (42, 42', 42") and the external lateral face opposite it belonging to the moulding rib of the second liner element.
